# EUROPEAN PATENT APPLICATION

(11) **EP 4 159 326 A1**
(43) Date of publication of application: **05.04.2023**
(21) Application number: 20938204.3
(22) Date of filing: 01.09.2020
(51) Int. Cl.: B05D 7/24, C09D 5/14, A01N 31/08, A01N 59/16, A01P 1/00, C09D 183/02, C09D 183/16, C09D 7/61, C09D 7/63, A01P 3/00

(54) **COATING MATERIAL AND COATING METHOD**

(30) Priority: 25.05.2020 JP 2020090889
(71) Applicant: Hardolass Holdings Co.,Ltd., Tokyo 135-0064 (JP)
(72) Inventor: YAMAMOTO, Hideaki, Kamagaya-shi, Chiba 273-0122 (JP); IKEDA, Masanori, Kamagaya-shi, Chiba 273-0122 (JP); ODAHARA, Genki, Kamagaya-shi, Chiba 273-0122 (JP); IWAMOTO, Aya, Kamagaya-shi, Chiba 273-0122 (JP)
(74) Representative: WSL Patentanwälte Partnerschaft mbB
(86) International application number: PCT/JP2020/033104
(87) International publication number: WO 2021/240833

(57) **Abstract**

Provided are a coating material and a coating method capable of making an antibacterial effect and an antiviral effect of a superficial layer of a coating target compatible for a long period of time.

The coating material contains a coating agent in which inorganic polysilazane and an alkyl silicate condensate are dissolved in an inert solvent at a total concentration of 50 to 80 mass%, as a base agent 10A, an inorganic antibacterial agent added to the base agent 10A at a ratio of 0.1 to 5 mass%, and an inorganic antiviral agent added to the base agent 10A at a ratio of 0.1 to 20 mass%.

## Description

### TECHNICAL FIELD

The present invention relates to a coating material and a coating method to be used in order to reform a superficial layer of an article or the like that is a coating target.

### BACKGROUND ART

In the related art, various articles or the like containing materials such as a resin material, a metal material, wood, and a rubber material are used as a coating target, a coating material is applied or sprayed to the surface of the article or the like to form a coating film, and thus, antibacterial properties of a superficial layer of the coating target are increased, and the coating target is hygienically improved (for example, refer to Patent Citation 1). In addition, similarly, the coating film is formed on the surface of the article or the like as the coating target, and thus, antiviral properties of the superficial layer of the coating target are increased.

### CITATION LIST

### Patent Literature

Patent Citation 1: JP 2004-168864 A (Page 3)
Patent Citation 2: JP 2018-172306 A (Page 3)

### SUMMARY OF INVENTION

### Technical Problem

However, in Patent Citation 1, since the coating material sprayed to the surface of the article is applied in contact with the surface in a state where the coating material is temporarily fixed by entering fine concavities and convexities on the surface of the article, the coating material is gradually peeled off, and the antibacterial effect is not capable of being sustained for a long period of time. In addition, in the coating material such as Patent Citation 1, it is possible to obtain a certain antibacterial effect, but for example, it is not possible to expect a protection effect against viruses such as influenza.

Further, in a case where an antiviral coating material such as Patent Citation 2 is used together with such an antibacterial coating material, there is a concern that the coating materials affect each other, and thus, not only is each effect not capable of being expected, but also the surface of the coating target may be altered. In particular, recently, in accordance with new coronavirus (covid-19) pandemic, it is desirable that various articles to be in contact with people are used as a target, and a superficial layer of the article is reformed such that not only an antibacterial effect but also an antiviral effect can be sustained for a long period of time.

The present invention has been made by focusing on such problems, and an object thereof is to provide a coating material and a coating method capable of making an antibacterial effect and an antiviral effect of a superficial layer of a coating target compatible for a long period of time.

### Solution to Problem

In order to attain the object described above, a coating material according to the present invention is a coating material that contains: a coating agent in which inorganic polysilazane and an alkyl silicate condensate are dissolved in an inert solvent at a total concentration of 50 to 80 mass%, as a base agent; an inorganic antibacterial agent added to the base agent at a ratio of 0.1 to 5 mass%; and an inorganic antiviral agent added to the base agent at a ratio of 0.1 to 20 mass%. According to such a characteristic, a glass coating film formed by the inorganic polysilazane and the alkyl silicate condensate is used as a parent material, and the inorganic antibacterial agent and the inorganic antiviral agent are fixed to a superficial layer of the coating film in a stable state, and thus, an antibacterial effect and an antiviral effect of the coating target coated with the coating material can be compatible for a long period of time.

Further, the coating material may be characterized by further containing an organic antibacterial/antiviral agent added to the base agent at a ratio of 0.1 to 10 mass%. According to such a characteristic, both of the antibacterial effect and the antiviral effect of the coating target can be increased.

A coating method according to the present invention is a coating method that includes a coating step of coating a surface of a coating target with a coating material containing a coating agent in which inorganic polysilazane and an alkyl silicate condensate are dissolved in an inert solvent at a total concentration of 50 to 80 mass%, as a base agent, an inorganic antibacterial agent added to the base agent at a ratio of 0.1 to 5 mass%, and an inorganic antiviral agent added to the base agent at a ratio of 0.1 to 20 mass%. According to such a characteristic, a glass coating film containing the inorganic polysilazane and the alkyl silicate condensate is formed on the surface of the coating target, the glass coating film is used as a parent material, and the inorganic antibacterial agent and the inorganic antiviral agent are fixed to a superficial layer of the coating film in a stable state, and thus, an antibacterial effect and an antiviral effect of the coating target can be compatibly obtained.

In the coating method, the coating step may be a step of forming a coating film to be a parent material containing SiO₂as a main component into a shape of a thin layer on the surface of the coating target and exposing the antibacterial agent and the antiviral agent to a superficial layer surface of the coating film. According to such a characteristic, the antibacterial agent and the antiviral agent are exposed to the superficial layer surface of the coating film, and thus, the antibacterial agent and the antiviral agent directly act on various germs or viruses, and the antibacterial effect and the antiviral effect can be increased for a long period of time.
Further, the coating film is formed into the shape of a thin layer, and thus, it is possible to ensure following capability with respect to the behavior of the surface of the coating target.

In the coating method, the coating step may be a step of coating the surface of the coating target to which moisture is attached with the coating material, forming a coating film to be a parent material containing SiO₂as a main component on the surface of the coating target by a chemical reaction between components contained in the coating material and moisture attached to the surface of the coating target, and exposing the antibacterial agent and the antiviral agent to a concave portion on a superficial layer surface of the coating film formed by the chemical reaction. According to such a characteristic, the antibacterial agent and the antiviral agent are exposed to the concave portion on the superficial layer surface of the coating film, which is formed by discharging gas generated by the chemical reaction between the components contained in the coating material and the moisture on the surface of the coating target, and thus, the antibacterial agent and the antiviral agent directly act on various germs or viruses, and the antibacterial effect and the antiviral effect can be increased for a long period of time.

### Further, particles of the antibacterial agent and the antiviral agent are arranged in the concave portion on the superficial layer surface of the coating film, and thus, the smoothness of the superficial layer surface can be increased.

The coating method may further includes a sterilization step of sterilizing the surface of the coating target, before the coating step. According to such a characteristic, it is possible to form a coating film having good quality and high substantivity on the surface of the coating target that is cleaned by the sterilization step.

The coating method may further include a pretreatment step of attaching the moisture to the surface of the coating target, before the coating step. According to such a characteristic, the moisture is attached to the surface of the coating target, and thus, the chemical reaction between the moisture and the components contained in the coating material is accelerated, and the coating film can be promptly and solidly formed on the surface of the coating target.

### BRIEF DESCRIPTION OF DRAWINGS

FIGS. 1A to 1C are sectional views illustrating a mechanism of forming a coating film on an article in Example, in chronological order.
FIG. 2 is an enlarged view of a portion surrounded by a dotted line of FIG. 1C.
FIG. 3 is an enlarged view of a portion surrounded by a dotted line of FIG. 1C in another embodiment.
FIG. 4 is a diagram in which a surface of a metal material coated with a coating film is imaged by AFM measurement: FIG. 4A is a diagram in which one layer of the coating film is formed; and FIG. 4B is a diagram in which three layers of the coating film are formed.
FIG. 5 is a table showing results of an ATP wiping test.

### DESCRIPTION OF EMBODIMENTS

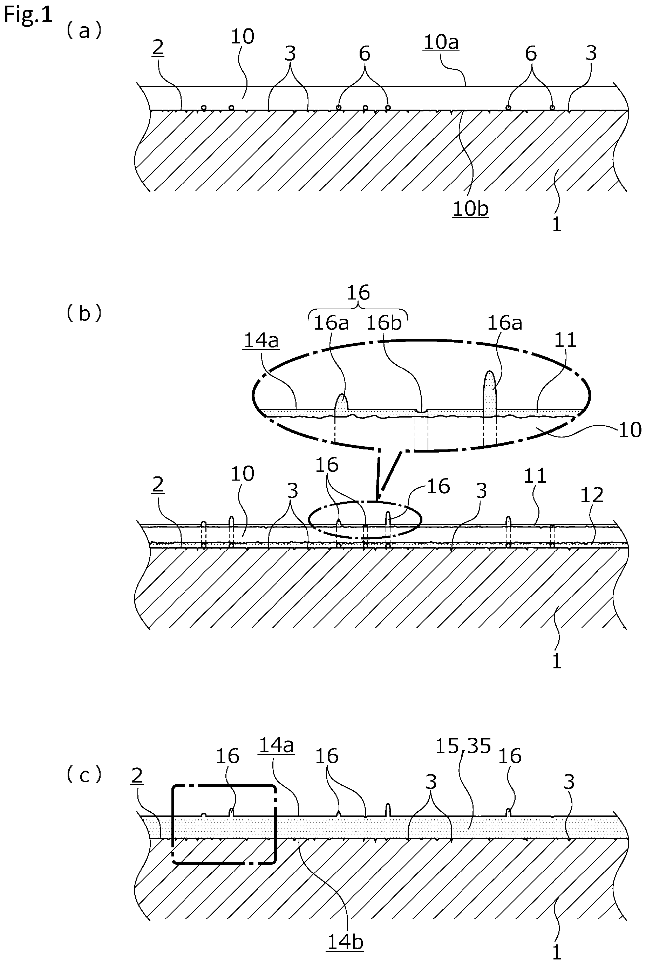

Modes for carrying out a coating material and a coating method according to the present invention will be described below with reference to FIG. 1 to FIG. 5. Examples

### (Coating Liquid)

A coating liquid 10 as a coating material of the present invention mainly contains a base agent 10A and additives 10B added to the base agent 10A. First, the base agent 10A contains at least inorganic polysilazane and an alkyl silicate condensate, as a raw material, and in this Example, the inorganic polysilazane and the alkyl silicate condensate are diluted with an inert solvent.

The inorganic polysilazane and the alkyl silicate condensate are dissolved in dibutyl ether as the inert solvent in this Example, at a total concentration in a range of 50 to 80 mass%. More specifically, the inorganic polysilazane is contained at 0.1 to 5 mass%, and the alkyl silicate condensate is contained at the remaining ratio.

More specifically, the inorganic polysilazane of this Example is perhydropolysilazane, that is, an inorganic polymer having a Si-H bond, a Si-N bond, and a N-H bond, and for example, having a chain structure including a - (SiH₂-NH)- unit represented by General Formula (1) described below.

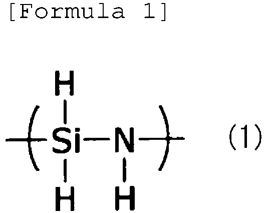

Note that, the inorganic polysilazane is not limited to have the chain structure, and may be a polymer having a cyclic structure, or may be a polymer compositely having the chain structure and the cyclic structure.

The alkyl silicate condensate, for example, is one or two or more types of condensates selected from tetramethyl orthosilicate, tetraethyl orthosilicate, tetra-n-propyl orthosilicate, tetra-i-propyl orthosilicate, tetra-n-butyl orthosilicate, tetra-sec-butyl orthosilicate, methyl polysilicate, and ethyl polysilicate.

The inert solvent is a solvent that is inert with respect to the inorganic polysilazane and the alkyl silicate condensate, and is preferably selected from dibutyl ether, dimethyl ether, diethyl ether, dipropyl ether, turpentine oil, benzene, toluene, and the like.

The additives 10B are added to the base agent 10A described above, in which 0.01 to 10 mass% of an inorganic antibacterial agent 21 is added, 0.01 to 40 mass% of an inorganic antiviral agent 22 is added, and 0.01 to 20 mass% of an organic antibacterial/antiviral agent 23 is added. Note that, at least the inorganic antibacterial agent 21 and the inorganic antiviral agent 22 may be added, and the organic antibacterial/antiviral agent 23 may not be added.

More specifically, the inorganic antibacterial agent 21 contains silver oxide-zinc calcium phosphate (Ag₂O-CaαZn_{β}Alγ(PO₄)₆). In addition, the inorganic antiviral agent 22 contains at least a molybdenum compound or a silver compound. In addition, the organic antibacterial/antiviral agent 23 contains diiodomethyl-p-tolylsulfone.

### (Aspect of Coating Material)

In addition, the coating liquid 10 of this Example, for example, is operated as a predetermined amount of liquid sealed in a glass or resin container, and the liquid is applied to the surface of various articles or the like to be a coating target by moistening a cloth material or the like (not illustrated) with the liquid to form a coating film. Note that, the operation of the coating material is not limited thereto, and for example, an unwoven cloth or the like impregnated in advance in a coating liquid may be sealed in a bag, and the bag may be opened at time of use, or the coating liquid may be applied to the surface of the coating target by being sprayed in the shape of mist.

### (Coating Method of Coating Film)

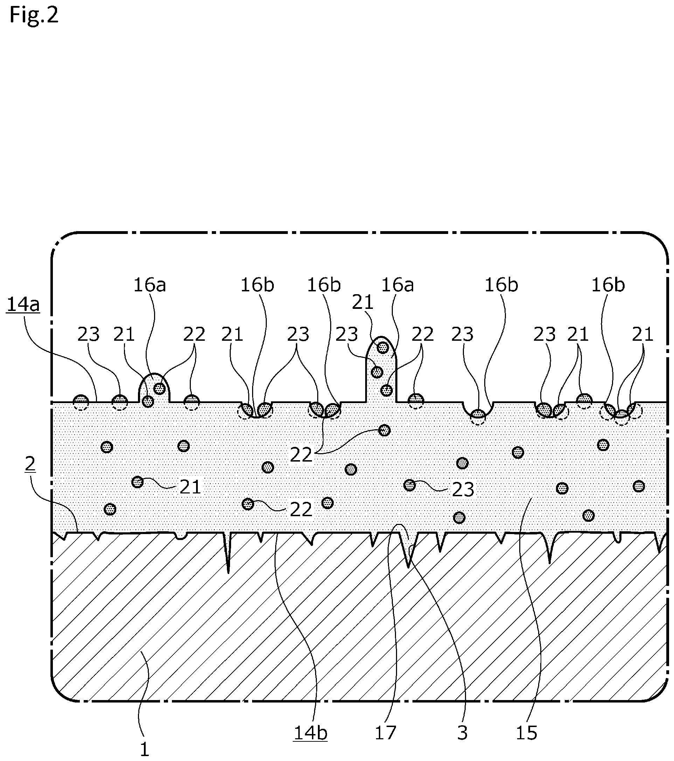

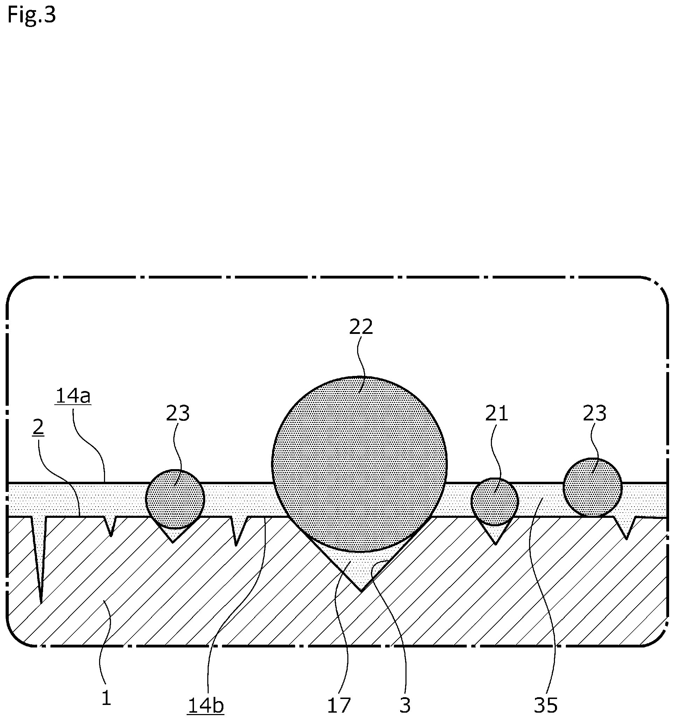

The coating liquid 10 is applied or sprayed to a surface 2 of the article 1 to be the coating target, and thus, chemically reacts with the moisture to form singlelayered or multi-layered coating films 15 and 35. Note that, the coating film 15 illustrated in FIG. 2 is formed at a micro level. In addition, the coating film 35 illustrated in FIG. 3, is formed into the shape of a thin layer at a nano level, and is formed as a coating film having a film thickness of preferably 1 nm to 500 nm, and more preferably 5 nm to 200 nm.

First, a sterilization step of sterilizing the surface 2 of the article 1 is performed before a coating step of the coating films 15 and 35. In the sterilization step, a sterilization liquid in which a hypochlorous acid having an antibacterial/antiviral effect in addition to a sterilization effect is diluted is attached to the surface 2 of the article 1 by mist or an unwoven cloth or the like impregnated with the sterilization liquid. According to such sterilization, it is possible to form the coating films 15 and 35 having good quality and high substantivity, which are easily applied to the surface 2 of the article 1 in a clean state and less likely to be peeled off.

Note that, as a pre-step, water (H₂O) such as purified water may be attached to the surface 2 of the article 1 by an unwoven cloth, mist, or the like, before the coating step and after the sterilization step described above. Accordingly, a chemical reaction between the moisture attached to the surface 2 of the article 1 and the components contained in the coating liquid 10 can be accelerated, and the coating films 15 and 35 can be promptly and solidly formed on the surface 2 of the article 1.

### (Coating Target)

As the coating target, various articles containing materials such as a resin material, a metal material, wood, a rubber material, and leather can be applied, or the coating target may be a fixed installation such as furniture, and for example, articles to be often in contact with a plurality of people, such as the surface of a manipulation unit of a mobile terminal or a remote controller, a top board or a drawer of a desk or a table, the dishes, belongings such as a bag or a wallet, a door knob or a handrail, a hanging strap of an electric train or a bus, a construction material, and a temporary material, are preferable as the coating target.

### (Mechanism of Forming Coating Film)

Next, a mechanism of forming the coating films 15 and 35 according to the present invention will be described. As illustrated in FIG. 1A, in many cases, a plurality of moistures 6, 6, ... (water droplets) are attached to the surface 2 of the article 1, for example, containing a metal material, as the coating target, due to moisture condensation or the humidity in the air even though the amount of moisture is small. In a case where the coating liquid 10 is applied or sprayed to the surface 2 of the article 1 into the shape of a thin film, the perhydropolysilazane that is the inorganic polysilazane configuring the base agent 10A contained in the coating liquid 10 chemically reacts with the moisture (H₂0) in the air, and thus, a coating layer having an inorganic structure is formed on the surface 2 of the article 1. Note that, a slight amount of gas (NH₃ and H₂) is accessorily formed by the chemical reaction described above, but such gas is appropriately volatilized into the air without remaining on the surface 2 of the article 1.

That is, as illustrated in FIG. 1B, the coating liquid 10 chemically reacts with the moisture contained in the air on a superficial layer surface 10a to be in contact with the air, and thus, gas such as hydrogen or ammonia, which is a by-product of the coating films 15 and 35 is volatilized from the superficial layer, and a coating layer 11 on the surface side of the coating films 15 and 35 is formed.

In addition, the coating liquid 10 applied to the surface 2 of the article 1 chemically reacts with the moistures 6, 6, ... (the water droplets) attached to the surface 2 or a hydroxyl group -OH existing in the surface 2 as a termination, on a back layer surface 10b to be in contact with the surface 2 of the article 1, and thus, gas such as hydrogen or ammonia rises in the coating layer to be volatilized from the superficial layer, and a coating layer 12 on the back surface side of the coating films 15 and 35 is formed.

As described above, first, the coating layers 11 and 12 are formed on the superficial layer surface 10a and the back layer surface 10b of the coating liquid 10, respectively. Next, the coating layer 11 expands from the superficial layer side toward the back layer side, and the coating layer 12 expands from the back layer side toward the superficial layer side, and thus, an intermediate coating layer is sequentially formed, and finally, the coating films 15 and 35 are formed over a superficial layer surface 14a to be in contact with the external air and a back layer surface 14b to be in contact with the surface 2 of the article 1.

As illustrated in FIG. 1C, unless a special superficial layer treatment such as mirror-like finishing is performed on the surface 2 of the article 1 before the coating films 15 and 35 are formed, a plurality of fine concave-convex portions 3 are formed at a micro level by a small flaw or the like that is generated in a manufacturing step or the like. The coating liquid 10 is cured as described above in a state of being applied to the surface 2 of the article 1 and entering the inside of the concave-convex portion 3, and thus, the coating material that is cured in a state of entering the concave-convex portion 3 functions as an anchor portion 17, and as a result thereof, the coating films 15 and 35 are more solidly and closely attached to the surface 2 of the article 1.

In addition, as illustrated in FIGS. 2 and 3, in the superficial layer and the inner portion of the coating films 15 and 35, the additives 10B contained in the coating liquid 10, that is, the inorganic antibacterial agent 21, the inorganic antiviral agent 22, and the organic antibacterial/antiviral agent 23 are mixed in the shape of a plurality of fine particles at a micro level, and a part thereof is exposed to the superficial layer surface 14a as described below.

The coating film 15 illustrated in FIG. 2 is formed at a micro level. In addition, as another embodiment, the coating film 35 illustrated in FIG. 3 is formed at a nano level that is thinner than that of the coating film 15 described above. Accordingly, even in a case of a glass coating film, the glass coating film is highly flexible, also combined with an anchor effect of the anchor portion 17 described above, and thus, even in a case where the surface 2 of the coating target causes the deformation of a cloth material or the like, it is possible to maintain coating properties of the coating film 35 following the deformation of the surface 2 without the coating film 35 being peeled off.

Note that, in a case where the surface 2 of the article 1 is a smooth surface having almost no concave-convex portions 3 described above, as a pretreatment of coating the coating film 15, the concave-convex portions 3 may be actively formed on the surface 2 of the article 1 by performing a roughening treatment with respect to the surface 2 of the article 1 using a filing or the like, and accordingly, an anchor effect of the coating film 15 can be obtained.

It is preferable that the concave-convex portions 3 having arithmetic average roughness of approximately 1 to 500 µm are formed on the surface 2 of the article 1 by performing such a roughening treatment, and accordingly, the anchor effect of the coating film 15 can be increased.

After the roughening treatment, for example, a clean treatment of blowing off a metal powder generated on the surface 2 of the article 1 by the filing by using air injection means such as an air gun is performed. Further, after the clean treatment, moisture condensation or the like occurs on the surface 2 of the article 1 with a predetermined time, and naturally-derived moisture is attached to the surface.

In addition, in this case, after the roughening treatment and the clean treatment of the surface 2 of the article 1, as a pretreatment step before the coating step, the moisture may be actively attached to the surface 2 of the article 1 on which the concave-convex portions 3 are formed by roughening, for example, by moisture applying means such as mist, and then, the coating film 15 may be applied, and accordingly, a chemical reaction between the moisture attached to the surface 2 of the article 1 and the coating liquid 10 to be in contact with the surface 2 of the article 1 can be accelerated. Note that, the moisture may be attached to the surface 2 of the article 1 by the moisture applying means, in particular, without performing the roughening treatment.

### (Shape of Coating Layer of Coating Film)

As illustrated in FIG. 2, concave-convex portions 16 in a concave-convex shape are formed at a nano level on the superficial layer surface 14a of the coating film 15, in the traces of volatilized air bubbles of the gas that is the by-product, on the surface of the coating film 15 applied to the surface 2 of the article 1. More specifically, it is assumed that a plurality of air bubbles of hydrogen, ammonia, or the like are formed by the chemical reaction described above, and when such air bubbles are discharged into the air from the smooth superficial layer surface 14a of the coating film 15, the influence of a surface tension that is generated on the superficial layer surface 14a of the coating film 15 in contact with the air bubbles is combined with the influence of the initial curing timing of the superficial layer surface 14a due to the chemical reaction, and thus, the concave-convex portions 16 including concave portions 16b and convex portions 16a at a nano level are formed on the smooth surface. Note that, in FIG. 1 and FIG. 2, the concave-convex dimension of the concave-convex portion 16 is illustrated by being deformed from the actual dimension, and in FIG. 3, the concave-convex portion 16 is omitted.

In addition, since the concave-convex portion 16 formed on the surface of the coating films 15 and 35 has a smaller depth and height dimension of the concavities and convexities than that of the concave-convex portion 3 originally formed on the surface 2 of the article 1 before being coated, the surface is more smoothly formed after coating than before coating, by applying the coating films 15 and 35 to the surface 2 of the article 1.

Note that, needless to say, the gas that is the by-product described above is homogeneously generated on the surface of the coating film 15, and thus, dimples 16 are evenly formed without any variation in the number of dimples per unit area of the coating film 15, the depth of the concave portion, and the height of the convex portion.

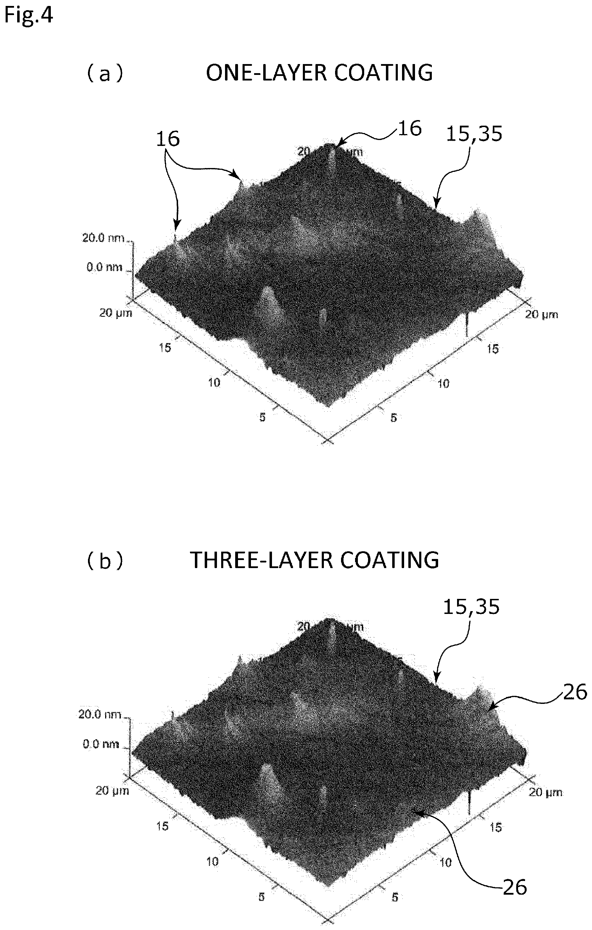

In addition, in the coating films 15 and 35 to be applied to the surface 2 of the article 1, when comparing dimples 16 formed on the coating films 15 and 35 in a case of single-layer coating as illustrated in FIG. 4A with dimples 26 formed on the coating films 15 and 35 in a case of multi-layer coating as illustrated in FIG. 4B, it is checked that the dimples 26 in a case of the multi-layer coating have a smaller depth and height dimension of the concavities and convexities. It is assumed that this is because the coating film is applied a plurality of times, and thus, the concavities and convexities of the dimples 16 at the time of the single-layer coating are evened, and the smoother dimples 26 are formed.

Further, a part of the surfaces of the additives B, that is, the inorganic antibacterial agent 21, the inorganic antiviral agent 22, and the organic antibacterial/antiviral agent 23, mixed in the shape of fine particles in the coating films 15 and 35, is fixed to the superficial layer surface 14a in a state of being exposed to the outside.

More specifically, as described above, the perhydropolysilazane configuring the base agent 10A of the coating liquid 10 accessorily generates the gas (NH₃ and H₂) by the chemical reaction with the moisture (H₂0), and such gas rises together with the fine particles of the additives B around the gas in the coating liquid 10. Accordingly, as illustrated in FIG. 2, a part of the additives B in the coating liquid 10 gathers in the vicinity of the superficial layer surface 14a of the coating film 15, in particular, in the concave-convex portion 16 formed on the superficial layer surface 14a by the volatilized gas.

A part of the fine particles of the additives B is arranged on the superficial layer surface 14a to complement the concave shape of the concave portion 16b. Accordingly, the inorganic antibacterial agent 21, the inorganic antiviral agent 22, and the organic antibacterial/antiviral agent 23 directly act on various germs or viruses, and the antibacterial effect and the antiviral effect can be increased for a long period of time. In addition, a part of the concave portion 16b is embedded by the additives B, and the smoothness of the superficial layer surface 14a can be increased.

In addition, another part of the fine particles of the additives B is arranged on the superficial layer surface 14a to be embedded in the inner portion of the convex portion 16a. Accordingly, in a case where a part of the convex portion 16a in a protruding shape is scraped on the superficial layer surface 14a of the coating film 15, in accordance with the use of the article 1 after coating, the additives B embedded in the convex portion 16a are exposed to the surface, and thus, the antibacterial/antiviral effect can be sustained for a long period of time.

In addition, in the coating films 15 and 35 formed on the surface 2 of the article 1 by applying the coating liquid 10 according to the present invention, the base contains an inorganic component, and the antibacterial agent 21 and the antiviral agent 22, which are additives, are also an inorganic component, and thus, it is possible to maintain a coating film state for a long period of time without elution/gasification to the base material or the outside, and degradation.

In addition, the coating film 35 illustrated in FIG. 3 as another embodiment is formed at a nano level that is less than that of the coating film 15 described above, and more specifically, has a film thickness of approximately 1 to 500 nm. In contrast, the inorganic antibacterial agent 21 has a particle diameter of approximately 0.8 to 1 µm, the inorganic antiviral agent 22 has a particle diameter of approximately 3 µm, and the organic antibacterial/antiviral agent 23 has a particle diameter of approximately 1 µm, which are all larger than the film thickness of the coating film 35. Accordingly, the upper portions of such particles are exposed to the outside of the superficial layer surface 34a of the coating film 35. Accordingly, the inorganic antibacterial agent 21, the inorganic antiviral agent 22, and the organic antibacterial/antiviral agent 23 directly act on various germs or viruses, and the antibacterial effect and the antiviral effect can be increased for a long period of time. In addition, the coating film 35 is formed into the shape of a thin layer, and thus, even in a case where the surface 2 of the article 1 is flexible, it is possible to ensure following capability with respect to the behavior thereof.

Further, since the base agent A is cured in a state where the lower portion of a part of the particles of the additives B is fitted into the concave-convex portion 3 formed on the surface 2 at the time of applying the coating liquid 10, the antibacterial effect and the antiviral effect can be sustained for a long period of time without peeling.

### (Evaluation Method of Antibacterial/Antiviral Effect)

As an evaluation method of the antibacterial/antiviral effect of the coating film, an adenosine triphosphoric acid (ATP) wiping examination was gradually performed with respect to the surface 2 coated with the coating films 15 and 35, and evaluation based on numerical values of ATP was performed. Here, ATP is a chemical substance existing as an energy source of all living objects on the earth, and the existence of ATP can be checked as evidence of the existence of the bacteria/viruses themselves or the trace of the bacteria/viruses. That is, it is evaluated that the degree of contamination of the surface is high (an infection risk is high) as the numerical value in an ATP wiping examination is large, and it is evaluated that the degree of contamination of the surface is low (the infection risk is low) as the numerical value in the ATP wiping examination is small.

The ATP wiping examination will be described. In the ATP wiping examination, a glass sample (A) in which the surface is coated with the coating material according to the present invention, samples (B) to (E) in which the surfaces are coated with different types of coating materials described below, respectively, for comparison, and a sample (no mark) not coated with any coating material are exposed to a normal temperature environment in the same experimental laboratory, ATP wiping is performed on the surface of each of the samples every day (every 24 hours), and a comparison of the number of detections of ATP is performed. Note that, a plurality of people come in and out the experimental laboratory, and thus, the experimental laboratory is in an environment where bacteria or viruses are capable of invading. In an ATP wiping operation on the surface, the surface of the sample is rubbed with the tip of a detection wire rod in the shape of a cotton swab in a given condition, and the tip is inserted dedicated ATP detector (not illustrated), and thus, the numerical value of ATP attached to the tip is detected.

The sample (B) is coated with a coating material containing only the base agent 10A without the additives 10B contained in the coating liquid 10 according to the present invention. Next, the sample (C) is coated with an inorganic glass coating material for sports articles or the like. In addition, the sample (D) is coated with an inorganic glass coating material for a mobile terminal or the like. In addition, the sample (E) is coated with an inorganic ceramic coating material.

### (Evaluation of Antibacterial/Antiviral Effect)

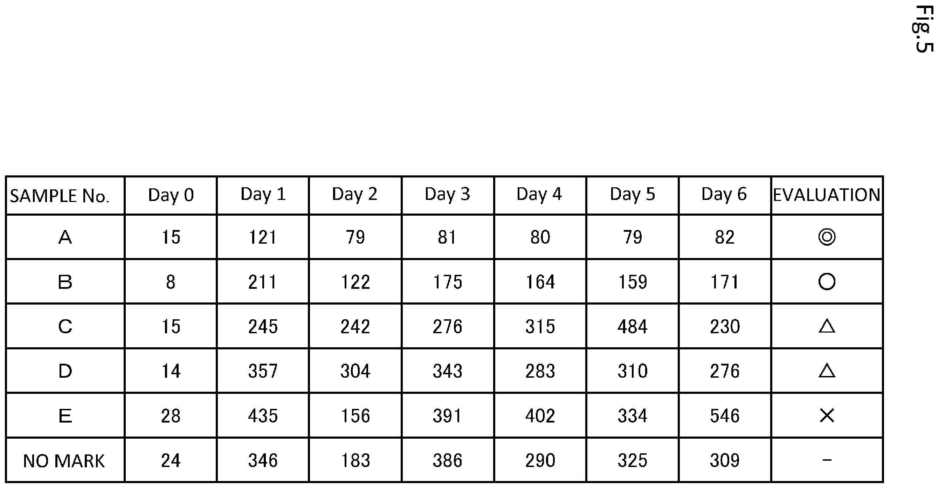

ATP wiping examination results are illustrated in FIG. 5. In the sample (A) coated with the coating material according to the present invention, a gradual increase in ATP was not checked, and it was checked that the highest antibacterial/antiviral effect was sustained, compared to the other samples. As illustrated in FIGS. 2 and 3, it is assumed that this is because the inorganic antibacterial agent 21, the inorganic antiviral agent 22, and the organic antibacterial/antiviral agent 23, which are fixed in a state of being exposed to the superficial layer surface 14a of the coating films 15 and 35, are directly in contact with bacteria or viruses, which fly in the external air together with droplets or dust and try to be attached to the superficial layer surface 14a, and act to prevent the bacteria or viruses from being fixed to the surface, and thus, the superficial layer surface 14a is cleanly maintained.

In addition, in the sample (B), ATP gradually increased, but an increase rate slightly stagnated. It is assumed that this is because the superficial layer surface of the coating film is formed into a smooth surface containing SiO₂as a main component by the base agent 10A containing the inorganic polysilazane without the antibacterial agent 21, the inorganic antiviral agent 22, and the organic antibacterial/antiviral agent 23, that is, a smoothness is higher than that of the surface of the sample before coating, and thus, the bacteria or the viruses can be prevented from being fixed to the surface to a certain extent.

In addition, in the sample (C), ATP gradually significantly increased, and the increase rate was also higher than that of the sample (B). It is assumed that this is because the inorganic antibacterial agent or the antiviral agent is not exposed to the superficial layer surface of the coating film, unlike the sample (A) described above, and thus, a resistance action on the bacteria or the viruses is insufficient.

In addition, similarly, in the sample (D) and the sample (E), ATP gradually significantly increased, and the increase rate was also higher than that of the sample (B). It is assumed that this is because the inorganic antibacterial agent or the antiviral agent is not exposed to the superficial layer surface of the coating film, as with the sample (C), and thus, the resistance action on the bacteria or the viruses is not capable of being obtained.

### (Function Effect of Present Invention)

As described above, the coating liquid 10 (the coating material) of the present invention contains the coating agent in which the inorganic polysilazane and the alkyl silicate condensate are dissolved in the inert solvent at a total concentration of 50 to 80 mass%, as the base agent 10A, the inorganic antibacterial agent 21 added to the base agent 10A at a ratio of 0.1 to 5 mass%, and the inorganic antiviral agent 22 added to the base agent 10A at a ratio of 0.1 to 20 mass%, and the inorganic antibacterial agent 21 and the inorganic antiviral agent 22 are fixed to the superficial layer surface 14a of the coating films 15 and 35 in a stable state by using the glass coating film formed by the inorganic polysilazane and the alkyl silicate condensate, as the parent material, and thus, the antibacterial effect and the antiviral effect of the article 1 (the coating target) coated with the coating liquid 10 can be compatible for a long period of time.

In addition, the coating liquid 10 further contains the organic antibacterial/antiviral agent 23 added to the base agent 10A at a ratio of 0.1 to 10 mass%, and thus, both of the antibacterial effect and the antiviral effect of the article 1 can be increased.

In addition, in the coating step of the coating liquid 10, the surface 2 of the article 1 to which the moisture is attached is coated with the coating liquid 10, the coating films 15 and 35 to be the parent material containing SiO₂as a main component are formed on the surface 2 of the article 1 by the chemical reaction between the components contained in the coating liquid 10 and the moisture attached to the surface 2 of the article 1, and the antibacterial agent 21 and the antiviral agent 22 are exposed to the concave portion 16b of the superficial layer surface 14a of the coating films 15 and 35 formed by the chemical reaction, and thus, the antibacterial agent 21 and the antiviral agent 22 directly act on various germs or viruses, and the antibacterial effect and the antiviral effect can be increased for a long period of time. Further, the particles of the antibacterial agent 21 and the antiviral agent 22 are arranged in the concave portion 16b of the superficial layer surface 14a of the coating films 15 and 35 such that the concave portion 16b can be embedded, and thus, the smoothness of the superficial layer surface 14a can be increased, compared to a coating liquid containing only the base agent without the additives.

Examples of the present invention have been described by the drawings, but the specific configuration is not limited to Examples, and changes or additions within a range not departing from the scope of the present invention are also included in the present invention.

For example, in Examples described above, the inorganic antibacterial agent 21 and the inorganic antiviral agent 22 are respectively added to the coating liquid 10, but the present invention is not limited thereto, and in a case where one material has the antibacterial effect and the antiviral effect, only the material may be added to the coating liquid.

### REFERENCE SIGNS LIST

- 1: Article (coating target)
- 2: Surface
- 3: Concave-convex portion
- 6: Moisture
- 10: Coating liquid (coating material)
- 10A: Base agent
- 10B: Additive
- 11, 12: Coating layer
- 14a: Superficial layer surface
- 14b: Back layer surface
- 15, 35: Coating film
- 16: Concave-convex portion
- 16a: Convex portion
- 16b: Concave portion
- 17: Anchor portion
- 21: Inorganic antibacterial agent
- 22: Inorganic antiviral agent
- 23: Organic antibacterial/antiviral agent

## Claims

1. A coating material, **characterized by** containing:
a coating agent in which inorganic polysilazane and an alkyl silicate condensate are dissolved in an inert solvent at a total concentration of 50 to 80 mass%, as a base agent;
an inorganic antibacterial agent added to the base agent at a ratio of 0.1 to 5 mass%; and
an inorganic antiviral agent added to the base agent at a ratio of 0.1 to 20 mass%.

2. The coating material according to claim 1, **characterized by** further containing
an organic antibacterial/antiviral agent added to the base agent at a ratio of 0.1 to 10 mass%.

3. A coating method, **characterized by** comprising
a coating step of coating a surface of a coating target with a coating material containing a coating agent in which inorganic polysilazane and an alkyl silicate condensate are dissolved in an inert solvent at a total concentration of 50 to 80 mass%, as a base agent, an inorganic antibacterial agent added to the base agent at a ratio of 0.1 to 5 mass%, and an inorganic antiviral agent added to the base agent at a ratio of 0.1 to 20 mass%.

4. The coating method according to claim 3, **characterized in that**
the coating step is a step of forming a coating film to be a parent material containing SiO₂as a main component into a shape of a thin layer on the surface of the coating target and exposing the antibacterial agent and the antiviral agent to a superficial layer surface of the coating film.

5. The coating method according to claim 3, **characterized in that**
the coating step is a step of coating the surface of the coating target to which moisture is attached with the coating material, forming a coating film to be a parent material containing SiO₂as a main component on the surface of the coating target by a chemical reaction between components contained in the coating material and moisture attached to the surface of the coating target, and exposing the antibacterial agent and the antiviral agent to a concave portion on a superficial layer surface of the coating film formed by the chemical reaction.

6. The coating method according to any one of claims 3 to 5, **characterized by** further comprising
a sterilization step of sterilizing the surface of the coating target, before the coating step.

7. The coating method according to any one of claims 3 to 6, **characterized by** further comprising
a pretreatment step of attaching the moisture to the surface of the coating target, before the coating step.
